# EUROPÄISCHE PATENTSCHRIFT

(11) **EP 4 379 317 B1**
(45) Veröffentlichungstag und Bekanntmachung des Hinweises auf die Patenterteilung: **08.10.2025**
(21) Anmeldenummer: 22210611.4
(22) Anmeldetag: 30.11.2022
(51) Int. Cl.: G01B 21/16, G01B 11/25, G01B 5/00

(54) **SYSTEM UND VERFAHREN ZUM PRÜFEN EINER OBERFLÄCHE EINES LUFT- ODER RAUMFAHRZEUGS**
SYSTEM AND METHOD FOR TESTING A SURFACE OF AN AIRCRAFT OR SPACECRAFT
SYSTÈME ET PROCÉDÉ DE CONTRÔLE D'UNE SURFACE D'UN AÉRONEF OU D'UN ENGIN SPATIAL

(43) Veröffentlichungstag der Anmeldung: 05.06.2024
(73) Patentinhaber: Airbus Operations GmbH, 21129 Hamburg (DE)
(72) Erfinder: Goehlich, Robert Alexander, 21129 Hamburg (DE); Bädker, Michel, 21129 Hamburg (DE); Hauser, Clara Marie, 21129 Hamburg (DE)

(56) Entgegenhaltungen:
- CN-U- 211 055 414
- WEGERIF D. ET AL: "Whole arm proximity control system for articulated robots working near space vehicles and flight hardware", vol. AIAA-93-4158, 22 August 1993 (1993-08-22), Reston, Virigina, pages 1 - 7, XP093042443, Retrieved from the Internet <URL:http://dx.doi.org/10.2514/6.1993-4158> [retrieved on 20230426], DOI: 10.2514/6.1993-4158
- WEGERIF D. ET AL: "Whole arm proximity control system for articulated robots working near space vehicles and flight hardware", SPACE PROGRAMS AND TECHNOLOGIES CONFERENCE AND EXHIBIT, vol. AIAA-93-4158, 22 August 1993 (1993-08-22), Reston, Virigina, pages 1 - 7, XP93042443, Retrieved from the Internet <URL:http://dx.doi.org/10.2514/6.1993-4158> DOI: 10.2514/6.1993-4158

## Beschreibung

### Technisches Gebiet

Die vorliegende Beschreibung betrifft ein System und ein Verfahren zum Prüfen einer Oberfläche eines Luft- oder Raumfahrzeugs.

### Technischer Hintergrund

Bei der Herstellung von Rumpfstrukturen, zum Beispiel für Flugzeuge oder Raumfahrzeuge, wird eine hohe Oberflächenqualität angestrebt. Weist der Rumpf z.B. Nietverbindungen auf, ist es üblich, die Qualität der Nietverbindungen visuell und/oder taktil zu prüfen und mit Messwerkzeugen punktuell zu vermessen. Dazu werden einzelne Nietverbindungen von der Seite beleuchtet und anhand eines Schattenbildes wird geprüft, ob ein Niet etwa zu tief oder zu hoch in einer Nietbohrung sitzt oder auf andere Weise auffällig ist. Es ist weiterhin üblich, mit dem Finger über einen Nietkopf zu fahren und/oder eine Messuhr zu verwenden, um überstehende oder zu tief liegende Kanten zu erkennen.

Darüber hinaus sind Geräte zur Oberflächenabtastung bekannt, die Lichtprojektions- und Bilderfassungstechniken verwenden, um Oberflächenabschnitte auf bestimmte Merkmale hin zu untersuchen. Diese Geräte werden in der Regel in der Hand gehalten und weisen einen Schaumstoffrahmen auf, der auf den zu prüfenden Oberflächenabschnitt gesetzt wird, gefolgt von einer optischen Erfassung des vom Schaumstoffrahmen eingeschlossenen Bereichs. Werden Punkte mit Formabweichungen festgestellt, werden Informationen darüber gespeichert. Dies geschieht insbesondere in Form von Bildinformationen, in denen die jeweiligen auffälligen Punkte entsprechend markiert sind.

CN 211 055 414 U offenbart ein autonomes Fahrzeug zur dreidimensionalen Vermessung eines Luftfahrzeugs aufweisend einen mehrgliedrigen Greifarm mit einem Triangulationssensor.

Für die Inspektion längerer Nietreihen am Rumpf eines Luft- oder Raumfahrzeugs, die hunderte Nietverbindungen oder mehr umfassen, ist eine solche Inspektion zeitaufwändig. Weiterhin kann die Oberflächenstruktur auch auf andere Anomalien hin geprüft werden, beispielsweise auf Beulen oder Kratzer.

### Beschreibung

Es kann als Aufgabe betrachtet werden, ein möglichst einfaches System und Verfahren vorzuschlagen, mit denen eine Inspektion einer Oberfläche eines Luft- oder Raumfahrzeugs möglichst schnell und zuverlässig automatisiert durchgeführt werden kann, wobei die Integrität des Luft- oder Raumfahrzeugs und der es umgebenden Montageumgebung vor Beschädigungen geschützt wird.

Diese Aufgabe wird durch das System mit den Merkmalen des unabhängigen Anspruchs 1 gelöst. Vorteilhafte Ausführungsformen und Weiterbildungen ergeben sich aus den Unteransprüchen und der nachfolgenden Beschreibung.

Es wird ein System zum Prüfen einer Oberflächenstruktur eines Luft- oder Raumfahrzeugs vorgeschlagen, aufweisend ein Bodenfahrzeug mit einem Antrieb, einen auf dem Bodenfahrzeug angeordneten Manipulator mit mehreren, gelenkig zueinander angeordneten Bewegungsgliedern, eine an dem Manipulator angeordnete und durch den Manipulator bewegbare Inspektionsvorrichtung, mehrere Näherungssensoren, und eine Steuereinheit, wobei die Näherungssensoren zumindest an dem Manipulator verteilt sind und dort in mehrere Zonen unterteilt sind und dazu ausgebildet sind, einen Abstand des Näherungssensors zu einem Objekt in einem jeweiligen Erfassungsbereich zu erfassen, wobei der Antrieb und die Näherungssensoren mit der Steuereinheit gekoppelt sind, wobei die Inspektionsvorrichtung dazu eingerichtet ist, eine Eigenschaft der Oberflächenstruktur zu bestimmen und Punkte mit einer Formabweichung durch Vergleich mit einer Soll-Eigenschaft zu identifizieren, wobei das System dazu ausgebildet ist, sukzessive die Oberflächenstruktur des Luft- oder Raumfahrzeugs durch sukzessives Bewegen der Inspektionsvorrichtung entlang der Oberflächenstruktur zu inspizieren, und wobei die Steuereinheit dazu ausgebildet ist, von den Näherungssensoren erfasste Abstände aufzunehmen, und den Antrieb und den Manipulator unter Berücksichtigung der erfassten Abstände derart anzusteuern, dass die Inspektionsvorrichtung nacheinander an Inspektionspositionen in einem vorgegebenen Abstand zu der Oberflächenstruktur platziert wird und gleichzeitig ein ausreichender Abstand des Bodenfahrzeugs und des Manipulators von der Oberflächenstruktur und etwaiger, die Oberflächenstruktur umgebender Objekte eingehalten wird.

Das Bodenfahrzeug ist dazu vorgesehen, den Manipulator und die daran angeordnete Inspektionsvorrichtung auf einem Boden entlang der zu inspizierenden Oberfläche an einem Montage- bzw. Bauplatz zu bewegen. Es ist vorstellbar, dass das Bodenfahrzeug in einem anderen Raum abgestellt wird und von diesem Raum an den Montage- bzw. Bauplatz gefahren wird. Das Bodenfahrzeug könnte daher bevorzugt dazu ausgebildet sein, auch größere Strecken zurückzulegen, die ein Vielfaches der Ausdehnung der zu untersuchenden Oberfläche beinhalten könnten. Das Bodenfahrzeug könnte möglichst kompakt und bevorzugt autark ausgeführt sein. Das Bodenfahrzeug könnte etwa als ein standardisiertes, fahrerloses Transportfahrzeug (UGV, "unmanned ground vehicle") ausgeführt sein, das als mobiler Roboter verstanden werden kann. Diese Art von Transporteinrichtungen sind im industriellen Umfeld bekannt und dienen unter anderem dazu, Paletten oder andere Gegenstände automatisiert entlang von Bodenlinien oder gestützt durch eine andere Navigationshilfe auf dem Boden zu verfahren. Der Antrieb ist bevorzugt elektrisch und das Bodenfahrzeug kann einen elektrischen Energiespeicher aufweisen, der mit dem Antrieb und den weiteren Komponenten verbindbar ist.

Der Manipulator kann mehrere Bewegungsglieder aufweisen, die beispielsweise stabförmig gestaltet und gelenkig miteinander verbunden sind. Bevorzugt sind die Gelenke aktiv rotierbar, um die Bewegungsglieder relativ zueinander bewegen zu können. Als Endeffektor an dem Manipulator ist die Inspektionsvorrichtung vorgesehen. Der Manipulator weist ein erstes Ende auf, das an dem Bodenfahrzeug angeordnet ist. Ein entgegengesetztes zweites Ende weist den Endeffektor bzw. die Inspektionsvorrichtung auf. Beispielsweise kann der Manipulator ein, zwei, drei, vier oder mehr Bewegungsglieder aufweisen, die eine kinematische Kette bilden und jeweils über ein Gelenk mit einem der anderen Bewegungsglieder verbunden sind, bzw. dem Bodenfahrzeug. Es ist bevorzugt, die Bewegungsglieder bzw. die Gelenke unabhängig voneinander bewegbar zu gestalten, wobei die Steuereinheit mit sämtlichen Aktuatoren verbunden ist, um sie anzusteuern und die Inspektionsvorrichtung wie gewünscht zu bewegen bzw. auszurichten.

Die Inspektionsvorrichtung kann auf unterschiedliche Weise realisiert werden. Vorzugsweise kann sie, wie eingangs erläutert, als optische Abtastvorrichtung ausgeführt sein, um bestimmte Merkmale berührungslos zu prüfen, indem sie ein Bild eines projizierten Musters aus sichtbarem Licht aufnimmt und auswertet. Eine solche Inspektionsvorrichtung ist bekannt und wird üblicherweise für die Inspektion von Flugzeugoberflächenstrukturen verwendet. Denkbar sind aber auch mechanische Abtastvorrichtungen oder Abtastvorrichtungen auf der Basis von nicht sichtbarem Licht.

Die Näherungssensoren sind dazu ausgebildet, bevorzugt berührungslos einen Abstand zu einem Objekt zu erfassen. Ein solcher Näherungssensor könnte beispielsweise als ein Ultraschallsensor realisiert sein, der Ultraschallsignale ausstrahlt und deren Reflexionen empfängt. Für metallische Objekte könnten weiterhin induktive Näherungssensoren eingesetzt werden. Kapazitive Näherungssensoren oder optische Sensoren sind ebenfalls denkbar, wobei letztere durch Laser- oder Kamerasysteme realisierbar wären. Die Näherungssensoren weisen jeweils einen bauartbedingten Erfassungsbereich und eine Erfassungsrichtung auf.

Ein Kern der Erfindung liegt darin, eine verbesserte Bewegungssteuerung und damit eine schnellere Bewegung der Inspektionsvorrichtung an einem Bau- oder Montageplatz zu ermöglichen. Beim Heranfahren des Bodenfahrzeugs und/oder des Manipulators an ein Objekt wird nicht lediglich ein Stoppsignal durch einen Näherungssensor erzeugt, der das betreffende Objekt erkennt. Stattdessen wird die Gesamtheit der Bewegungen der einzelnen Bewegungsglieder und des Bodenfahrzeugs so gesteuert, dass auch bei Annäherung an das Objekt ein Weiterbewegen der Inspektionsvorrichtung ermöglicht wird, indem die individuellen Abstände der einzelnen Komponenten des Bodenfahrzeugs und des Manipulators auf einem vorgegebenen (Mindest-)Wert gehalten werden und lediglich die Bewegbarkeit bzw. Geschwindigkeit einzelner Komponenten bedarfsweise eingeschränkt wird. Durch eine Unterteilung in Zonen können mehrere Bereiche des Manipulators und des Bodenfahrzeugs individuell beobachtet werden, um lokale Einschränkungen der Bewegung zu planen. Es wird damit eine intelligente, vorausschauende Bewegungssteuerung ermöglicht, die auch bei nicht vorher bekannten Hindernissen eine rasche Abfolge des Anfahrens von Inspektionspositionen ermöglicht und das Prüfen der Oberflächenstruktur beschleunigt. Das System kann während der Herstellung, bei der Wartung und im laufenden Betrieb, beispielsweise zwischen zwei aufeinanderfolgenden Flügen, eingesetzt werden.

In einer vorteilhaften Ausführungsform ist die Steuereinheit dazu ausgebildet, diejenigen Elemente des Manipulators, die näher an einem Objekt oder der Oberflächenstruktur gelegen sind als andere Elemente, mit einer geringeren Geschwindigkeit zu bewegen als die anderen Elemente. Folglich wird eine adaptive Bewegung des Bodenfahrzeugs und des Manipulators durchgeführt, um einen reibungslosen Ablauf des Prüfens der Oberflächenstruktur durchzuführen. Das Vorbeibewegen an Hindernissen oder anderen Objekten erfolgt demnach in der Weise, dass Bereiche an dem Bodenfahrzeug bzw. Manipulator mit der höchsten Kollisionswahrscheinlichkeit, d.h. mit dem geringsten Abstand zu einem Hindernis oder einem anderen Objekt, am langsamsten bewegt werden. Die Ansteuerung durch die Steuereinheit kann so erfolgen, dass Bewegungsabläufe des Bodenfahrzeugs bzw. des Manipulators so geplant werden, dass ein weiteres Annähern an ein Objekt bzw. ein Hindernis verhindert wird.

In einer vorteilhaften Ausführungsform umfassen die Zonen eine Endeffektorzone, die an die Inspektionsvorrichtung angrenzt oder in deren Bereich die Inspektionsvorrichtung angeordnet ist, wobei die Steuereinheit dazu ausgebildet ist, aus erfassten Entfernungen der Näherungssensoren in der Endeffektorzone die Platzierung der Inspektionsvorrichtung an einer der Inspektionspositionen zu unterstützen. Eine Teilmenge der erfassten Abstände wird verwendet, um eine präzise Positionierung der Inspektionsvorrichtung an der zu prüfenden Oberflächenstruktur durchzuführen. Es sind keine dedizierten Näherungssensoren notwendig, die ausschließlich für die Positionierung der Inspektionsvorrichtung an der Oberflächenstruktur vorgesehen sind. Es ist allerdings auch möglich, dass zusätzlich dazu auch die Inspektionsvorrichtung selbst mit Abstandssensoren ausgestattet sein könnte, die eine Positionierung der Inspektionsvorrichtung an der Oberflächenstruktur erlauben. Die Endeffektorzone könnte an einem Gelenk oder angrenzend an ein Gelenk vorliegen, an dem die Inspektionsvorrichtung angeordnet ist. Es ist denkbar, dass die Erfassungsbereiche der in der Endeffektorzone angeordneten Näherungssensoren zumindest teilweise auf die Ausrichtung der Inspektionsvorrichtung angepasst sind.

In einer vorteilhaften Ausführungsform ist die Steuereinheit dazu ausgebildet, einen Bewegungspfad der Inspektionsvorrichtung zum Erreichen der Inspektionspositionen zu planen, wobei die erfassten Abstände der Näherungssensoren unterschiedlich gewichtet werden. Der geplante Bewegungspfad könnte insbesondere von den geringeren erfassten Abständen abhängig gemacht werden, etwa durch stärkere Gewichtung. Damit kann das Halten eines Mindestabstands sämtlicher Komponenten des Systems zu einem Hindernis bzw. anderen Objekt unterstützt werden.

In einer vorteilhaften Ausführungsform ist die Steuereinheit dazu ausgebildet, mindestens ein Modell für maschinelles Lernen zu nutzen, um den Bewegungspfad für das Bodenfahrzeug und/oder des Manipulators zu planen, wobei der Bewegungspfad zumindest teilweise auf Grundlage einer Wertfunktion abgeleitet wird, die die erfassten Abstände umfasst und hieraus Kollisionswahrscheinlichkeiten zwischen dem Bodenfahrzeug bzw. dem Manipulator und der Oberflächenstruktur und anderen Objekten beschreibt, und wobei der Bewegungspfad eine Abfolge von Bewegungsabläufen des Bodenfahrzeugs und/oder des Manipulators umfasst. Die Abfolge von Bewegungsabläufen könnte insbesondere die Gesamtheit aller Teilbewegungen sämtlicher Aktuatoren des Manipulators bzw. des Antriebs des Bodenfahrzeugs betreffen, die dazu dienen, die Inspektionsvorrichtung an den Inspektionspositionen zu platzieren. Das maschinelle Lernen ermöglicht dem System, den Bau- bzw. Montageplatz durch wiederholtes Prüfen von Oberflächenstrukturen von Luft- oder Raumfahrzeugen die Eigenschaften der Umgebung zu erlernen und adaptiv die Bewegung des Bodenfahrzeugs und des Manipulators darauf anzupassen. Somit kann die Effizienz des Systems kontinuierlich gesteigert und eine mögliche Geschwindigkeit des Prüfens erhöht werden. Die Steuereinheit kann die erfassten Abstände in den maschinellen Lernalgorithmus einspeisen, um diese zu analysieren. Da Algorithmen für maschinelles Lernen probabilistischer Natur sind, kann die Steuereinheit in der Lage sein, mindestens ein statistisches Merkmal aus den erfassten Abständen zu bestimmen und mindestens einen Zustandsindikator aus dem mindestens einen statistischen Merkmal zu berechnen, der dann zur Bewertung der Wahrscheinlichkeiten verschiedener unerwünschter Zustände, d.h. eine Kollision mit der zu prüfenden Oberfläche, Einrichtungen des Montage- bzw. Bauplatzes, dem System selbst, einem anderen, gleichartigen System, falls mehrere davon eingesetzt werden, einem Menschen, oder dergleichen, verwendet wird, die dem Algorithmus für maschinelles Lernen während des Trainings vorgelegt werden. Die Erkennung eines unerwünschten Zustands kann dann als Überschreitung einer zuvor festgelegten Grenzwahrscheinlichkeit interpretiert werden.

In einer vorteilhaften Ausführungsform ist die Steuereinheit dazu ausgebildet, die Näherungssensoren zum Vermeiden von gegenseitiger Beeinflussung sequenziell anzusteuern. Dies kann beispielsweise das sequenzielle Ansteuern von Näherungssensoren betreffen, deren Erfassungsbereiche sich teilweise überlagern. Durch das Vermeiden gegenseitiger Beeinflussung wird die Genauigkeit des Erfassens von Abständen deutlich erhöht. Sind beispielsweise an den Bewegungsgliedern des Manipulators mehrere Näherungssensoren verteilt, die radial nach außen gerichtete und eine quer zu dem betreffenden Bewegungsglied Ebene aufspannende Erfassungsbereiche aufweisen, könnte es sinnvoll sein, stets nur einander entgegengesetzte statt benachbarte Näherungssensoren gleichzeitig anzusteuern.

In einer vorteilhaften Ausführungsform ist der Manipulator ein Roboterarm, der über ein Basisgelenk mit dem Bodenfahrzeug verbunden ist, wobei die Bewegungsglieder längliche Armglieder sind, und wobei der Manipulator ein Endeffektorgelenk umfasst, an dem die Inspektionsvorrichtung angeordnet ist. Das Basisgelenk und/oder das Endeffektorgelenk ist jeweils mindestens um zwei Achsen rotierbar und erlaubt eine hohe Beweglichkeit der Inspektionsvorrichtung, um die Inspektionsvorrichtung je nach Position des Bodenfahrzeugs, an einer gewünschten Inspektionsposition zu platzieren und gleichzeitig auf gewünschte Weise auszurichten.

In einer vorteilhaften Ausführungsform umfasst der Manipulator ein Netz aus elektrischen Anschlussleitungen, das zumindest bereichsweise an einer Oberfläche des Manipulators verläuft, wobei die Näherungssensoren an der Oberfläche des Manipulators angeordnet und mit dem Netz verbindbar sind. Die Näherungssensoren können dadurch leicht ausgetauscht, entfernt oder nachgerüstet werden. Je nach Art und Ausführung des Manipulators könnte es sich anbieten, bestimmte Modifikationen vorzunehmen, um eine verbesserte Bewegungsplanung zu ermöglichen. Das Netz könnte sich über einen wesentlichen Teil des Manipulators erstrecken und erlaubt eine sehr flexible Ausstattung des Manipulators mit Näherungssensoren.

In einer vorteilhaften Ausführungsform sind die Anschlussleitungen dazu ausgebildet, eine elektrische Versorgungsspannung für die Näherungssensoren bereitzustellen, wobei die Näherungssensoren dazu ausgebildet sind, drahtlos mit der Steuereinheit zu kommunizieren. Das Netz kann folglich sehr einfach gestaltet sein und sich lediglich auf die Verteilung zweier Spannungspole auf der Oberfläche beschränken. Einzelne Näherungssensoren könnten lediglich auf die Oberfläche des Manipulators aufgeklebt werden, um dort mit einer Spannung versorgt zu werden.

In einer vorteilhaften Ausführungsform ist das System dazu ausgebildet, einen identifizierten Punkt mit einer Formabweichung mittels einer ablösbaren Markierung zu markieren. Die Markierung könnte eine ablösbare Farbe aufweisen, mit der die Formabweichung umkreist wird. Ein Aufkleber, der gegebenenfalls mit einem Barcode oder einem QR-Code bedruckt ist und das Bereitstellen weiterer Informationen erlaubt, könnte an oder neben der Formabweichung aufgeklebt sein. Das Anbringen eines RFID-Tags ist ebenso denkbar.

Das System ist bevorzugt dazu ausgebildet, Daten zu generieren, die die abzutastende Oberfläche und/oder zumindest ermittelte Anomalien der Oberflächenstruktur repräsentieren. Das System ist hierfür in der Lage, eine Position der jeweiligen Anomalie exakt festzustellen, beispielsweise durch ein an dem Montage- oder Bauplatz installiertes Positionierungssystem, das eine Positionsbestimmung ermöglicht, etwa durch ein Markierungsraster an dem Boden oder der Oberflächenstruktur, ein Lasersystem oder ähnliches.

Die Erfindung betrifft ferner ein Verfahren zum Prüfen einer Oberflächenstruktur eines Luft- oder Raumfahrzeugs, aufweisend die Schritte des Bereitstellens mindestens eines Bodenfahrzeugs mit einem Antrieb, einem auf dem Bodenfahrzeug angeordneten Manipulator mit mehreren, gelenkig zueinander angeordneten Bewegungsgliedern, eine an dem Manipulator angeordnete und durch den Manipulator bewegbare Inspektionsvorrichtung, und mehrere Näherungssensoren, die zumindest an dem Manipulator verteilt sind und dort in mehrere Zonen unterteilt sind und dazu ausgebildet sind, einen Abstand des Näherungssensors zu einem Objekt in einem jeweiligen Erfassungsbereich zu erfassen; und des sukzessiven Bewegens der Inspektionsvorrichtung entlang der Oberflächenstruktur durch Ansteuern mit einer Steuereinheit, und Identifizieren von Punkten mit einer Formabweichung durch Bestimmen einer Eigenschaft der Oberflächenstruktur und Vergleichen mit einer Soll-Eigenschaft, wobei das Ansteuern das Aufnehmen von von den Näherungssensoren erfassten Abständen und das Steuern des Antriebs und des Manipulators unter Berücksichtigung der erfassten Abstände umfasst, sodass die Inspektionsvorrichtung nacheinander an Inspektionspositionen in einem vorgegebenen Abstand zu der Oberflächenstruktur platziert wird und gleichzeitig ein ausreichender Abstand des Bodenfahrzeugs und des Manipulators von der Oberflächenstruktur und etwaiger, die Oberflächenstruktur umgebender Objekte eingehalten wird.

In einer vorteilhaften Ausführungsform steuert die Steuereinheit diejenigen Elemente des Manipulators, die näher an einem Objekt oder der Oberflächenstruktur gelegen sind, derart an, dass sie sich mit einer geringeren Geschwindigkeit bewegen als andere Elemente.

In einer vorteilhaften Ausführungsform plant die Steuereinheit einen Bewegungspfad der Inspektionsvorrichtung zum Erreichen der Inspektionspositionen, wobei die erfassten Abstände der Näherungssensoren unterschiedlich gewichtet werden.

In einer vorteilhaften Ausführungsform nutzt die Steuereinheit mindestens ein Modell für maschinelles Lernen, um den Bewegungspfad für das Bodenfahrzeug und/oder den Manipulator zu planen, wobei der Bewegungspfad zumindest teilweise auf Grundlage einer Wertfunktion abgeleitet wird, die die erfassten Abstände umfasst und hieraus Kollisionswahrscheinlichkeiten beschreibt, und wobei der Bewegungspfad eine Abfolge von Bewegungsabläufen des Bodenfahrzeugs und/oder des Manipulators umfasst.

Das erfindungsgemäße System und das erfindungsgemäße Verfahren sind grundsätzlich dazu ausgebildet, an mehreren Abschnitten gleichzeitig die Oberflächenstruktur zu prüfen. Hierzu können mehrere Systeme, d.h. mehrere Bodenfahrzeuge mit darauf angeordnetem Manipulator und Inspektionsvorrichtung eingesetzt werden. Die jeweilige Steuereinheit ist durch die Vielzahl der Näherungssensoren in der Lage, auch eine Kollision eines Systems mit einem anderen System zu verhindern.

Es ist grundsätzlich denkbar, dass die Steuereinheiten der mehreren Systeme miteinander koppelbar sind, um die Positionen der einzelnen Bodenfahrzeuge und Manipulatoren gegenseitig zu übermitteln, um vorausschauend eine Kollision zu verhindern.

Gleichzeitig ist denkbar, dass erfasste Abstände eines der Systeme mit einer entsprechenden Positionsangabe des betreffenden, die Abstände erfassenden Systems auch zu Steuereinheiten anderer Systeme übertragen werden, sodass eine vorausschauende Planung von Bewegungsabläufen ermöglicht wird.

In einer vorteilhaften Ausführungsform des Verfahrens könnten folglich mehrere Bodenfahrzeuge mit darauf angeordnetem Manipulator und Inspektionsvorrichtung oder mindestens ein Bodenfahrzeug und mindestens eine andere, einen Manipulator und eine Inspektionsvorrichtung tragende und eine Steuereinheit aufweisende Vorrichtungen gemeinsam mehrere Abschnitte der Oberflächenstruktur prüfen, wobei die Steuereinheiten miteinander koppelbar sind, um Positionsangaben des jeweiligen Bodenfahrzeugs oder der anderen Vorrichtung und/oder des jeweiligen Manipulators und/oder der jeweiligen Inspektionsvorrichtung zu kommunizieren, und/oder um jeweils erfasste Abstände mit Positionsangaben des jeweiligen Bodenfahrzeugs oder der anderen Vorrichtung und/oder des jeweiligen Manipulators und/oder der jeweiligen Inspektionsvorrichtung zu kommunizieren. Die "andere Vorrichtung" könnte ebenso als ein Fahrzeug verstanden werden, welches nicht zwangsläufig bodengebunden ist und beispielsweise an einem Seil, einer oberhalb des Bodens angeordneten Schiene oder über Auftriebsmittel an der Oberflächenstruktur entlang bewegbar ist.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung eines Systems gemäß einem Ausführungsbeispiel bei der Abtastung einer Oberfläche eines Luftfahrzeugs.
- Fig. 2: eine schematische Darstellung eines Ablaufs von Inspektionsvorgängen an dem Luftfahrzeug.
- Fig. 3: das System in einer schematischen Ansicht.
- Fig. 4: eine schematische Ansicht von über einen Umfang eines Armglieds verteilten Näherungssensoren.
- Fig. 5: eine schematische Darstellung eines Netzes von Anschlussleitungen.

### Detaillierte Beschreibung von Ausführungsbeispielen

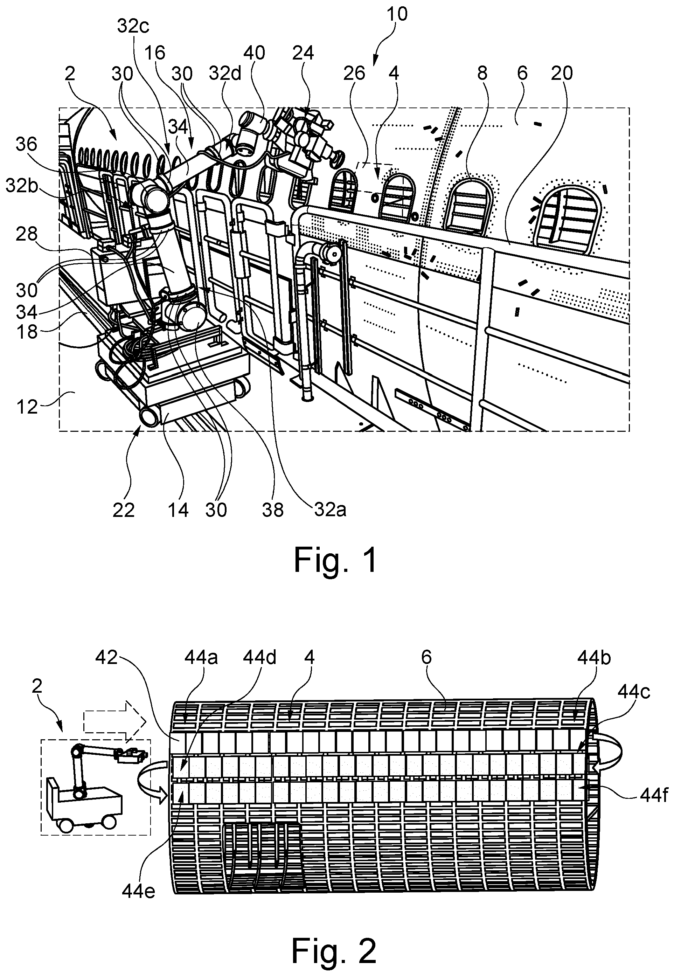

Fig. 1 zeigt ein System 2 zum Prüfen einer Oberflächenstruktur 4 eines Luftfahrzeugs 6. Die Oberflächenstruktur 4 umfasst beispielsweise Nietreihen auf einer Rumpfoberfläche, beispielsweise zwischen, über oder unter Fenstern 8. Der in Fig. 1 gezeigte Bereich ist lediglich beispielhaft zur Illustration und nicht als Beschränkung zu verstehen. Das Luftfahrzeug 6 ist an einem Montage- bzw. Bauplatz 10 angeordnet, wobei dort ein Boden 12 vorgesehen ist, der sich entlang der Oberflächenstruktur 4 erstreckt. Dort befindet sich ein zu dem System 2 gehöriges Bodenfahrzeug 14, auf dem ein Manipulator 16 angeordnet ist.

Das Bodenfahrzeug 14 ist beispielhaft als ein standardisiertes, fahrerloses Transportfahrzeug (UGV, "unmanned ground vehicle") ausgeführt und kann sich bevorzugt autonom auf dem Boden 12 bewegen. Zur mechanischen oder optischen Führung auf einer Fahrspur ist hier eine Bodenschiene 18 vorgesehen, die sich geradlinig entlang der Oberflächenstruktur 4 in oder auf dem Boden 12 erstreckt. Zur Abgrenzung des Bodens 12 an dem Montage- bzw. Bauplatz 10 zu dem Luftfahrzeug 6 hin ist ein Geländer 20 vorgesehen, welches je nach der Ausstattung des Montage- bzw. Bauplatzes 10 unregelmäßig gestaltet sein könnte. Beispielsweise könnten vereinzelt Türen zum Eintreten in den Rumpf des Luftfahrzeugs 6 vorgesehen sein.

Das Bodenfahrzeug 14 weist einen Antrieb 22 auf und kann sich entlang des Bodens 12 bewegen. Hierbei wird mittels einer Inspektionsvorrichtung 24, die an dem Manipulator 16 angeordnet ist, die Oberflächenstruktur 4 des Luftfahrzeugs 6 geprüft. Bei der Inspektionsvorrichtung 24 handelt es sich in diesem Fall um eine Vorrichtung, die Formabweichungen in der Oberflächenstruktur 4 erkennt. Dies wird dadurch realisiert, dass in einem vorbestimmten Abstand zu der Oberflächenstruktur 4 ein Muster aus sichtbarem Licht auf die Oberflächenstruktur projiziert wird und ein resultierendes Bild 26 erfasst und ausgewertet wird. Derartige Inspektionsvorrichtungen 26 sind für die Abtastung von Oberflächenstrukturen bekannt, werden jedoch üblicherweise handgehalten eingesetzt.

Wie in Fig. 1 deutlich ist, werden durch die Inspektionsvorrichtung 24 lediglich kleine Abschnitte der Oberflächenstruktur 4 untersucht, sodass nacheinander Inspektionspositionen auf der Oberflächenstruktur 4 angefahren werden müssen, um den relevanten Bereich der Oberflächenstruktur 4 insgesamt erfassen zu können. Das Bodenfahrzeug 14 weist hierzu eine Steuereinheit 28 auf, die dazu ausgebildet ist, von mehreren Näherungssensoren 30 erfasste Abstände aufzunehmen, und den Antrieb 22 und den Manipulator 16 unter Berücksichtigung der erfassten Abstände derart anzusteuern, dass die Inspektionsvorrichtung 24 nacheinander an Inspektionspositionen in einem vorgegebenen Abstand zu der Oberflächenstruktur 4 platziert wird und gleichzeitig ein ausreichender Abstand des Bodenfahrzeugs 14 und des Manipulators 16 von der Oberflächenstruktur 4 und die Oberflächenstruktur 4 umgebender Objekte 20 eingehalten wird.

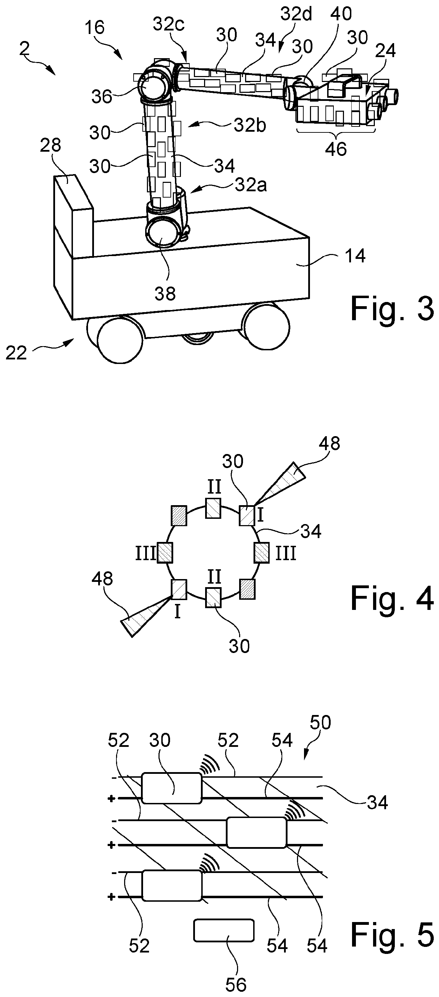

Es sind dabei mehrere Näherungssensoren 30 vorgesehen, die über den Manipulator 16 verteilt und in mehrere Zonen 32a, 32b, 32c und 32d unterteilt sind. Der Manipulator 16 weist beispielhaft zwei stabförmige Armglieder 34 auf, die über ein Gelenk 36 verbunden sind. Über ein Basisgelenk 38 ist der Manipulator 16 mit dem Bodenfahrzeug 14 verbunden. Ein Endeffektorgelenk 40 ist an einem freien Ende des Manipulators 16 angeordnet und trägt die Inspektionsvorrichtung 24. Die Näherungssensoren 30 sind in umlaufenden Reihen an den Armgliedern 34 angeordnet und weisen jeweils einen Erfassungsbereich auf, der radial nach außen gerichtet ist. Dies wird weiter nachfolgend anhand von Fig. 3 und 4 erläutert. Die Steuereinheit 28 ist mit den Näherungssensoren 30, dem Antrieb 28 und dem Manipulator 16 gekoppelt.

Fig. 2 zeigt die Oberflächenstruktur 4 des Luftfahrzeugs 6 in einer schematischen Teilansicht, mit angedeutetem System 2. Hier sind einzelne Inspektionspositionen 42 gezeigt, die nacheinander von dem System 2 abgefahren werden, um durch lokales Abtasten der Oberflächenstruktur 4 nacheinander einen interessanten Bereich der Oberflächenstruktur 4 zu prüfen. Hier sind lediglich exemplarisch drei übereinanderliegende Reihen von Inspektionspositionen 42 gezeigt, welche sukzessive nacheinander angefahren werden, um dort eine lokale Inspektion durchzuführen.

Dies kann etwa bedeuten, dass das System 2 entlang des gesamten Bereichs der Oberflächenstruktur 4 dreimal bei jeweils gleichbleibender Höhe der Inspektionsvorrichtung 24 verfahren wird. Zunächst startet das System 2 an einer ersten Startposition 44a und läuft bis zu einer ersten Endposition 44b. Anschließend wird die Inspektionsvorrichtung 24 etwas abgesenkt, um von einer unter der ersten Endposition 44b liegenden zweiten Startposition 44c zu einer zweiten Endposition 44d zu fahren, die unterhalb der ersten Startposition 44a angeordnet ist. Dann wird die Inspektionsvorrichtung 24 erneut abgesenkt, um von einer unter der zweiten Endposition 44d liegenden dritten Startposition 44e bis zu einer dritten Endposition 44f verfahren zu werden, die sich dabei unter der zweiten Startposition 44c befindet. Selbstverständlich sind andere Abläufe möglich und die Inspektionspositionen 42 könnten auch spaltenweise abgefahren werden.

Während der gesamten Bewegung des Systems 2 auf dem Boden 12 nehmen die Näherungssensoren 30 ihre Umgebung wahr und übermitteln der Steuereinheit 28 erfasste Abstände. Dies kann in Form von Messgrößen, die direkt den Abstand angeben, erfolgen. Es ist allerdings auch denkbar, dass die Steuereinheit 28 mit einer Auswerteelektronik, Filtern und dergleichen ausgestattet ist, um abstrakte Signale von den Näherungssensoren 30 in entsprechende Abstandswerte umzuwandeln. Durch die Gewichtung der von allen Näherungssensoren 30 erfassten Abständen kann die Steuereinheit 28 die Ansteuerung des Antriebs 22 und des Manipulators 16 durchführen, um jeweils einen Mindestabstand sowohl zu der Oberflächenstruktur 4, als auch zu den umgebenden Objekten 20 zu wahren.

Damit kann einer Beschädigung der Inspektionsvorrichtung 24 und des Manipulators 16 sowie der Objekte 20 und der Oberflächenstruktur 4 entgegengewirkt werden.

Die Steuereinheit 28 ist dabei exemplarisch dazu ausgebildet, mindestens ein Modell für maschinelles Lernen zu nutzen, um den Bewegungspfad für das Bodenfahrzeug 14 und/oder den Manipulator 16. Der Bewegungspfad kann zumindest teilweise auf Grundlage einer Wertfunktion abgeleitet werden, die die erfassten Abstände umfasst und hieraus Kollisionswahrscheinlichkeiten beschreibt.

Fig. 3 zeigt noch einmal das System 2, wobei eine Vielzahl von einzelnen Näherungssensoren 30 vorgesehen ist. Diese könnten beispielsweise auch an bzw. über die Inspektionsvorrichtung 24 ragen und dort eine Endeffektorzone 46 bilden. Diese könnte die Steuereinheit 28 dabei unterstützen, die Inspektionsvorrichtung 24 präzise in dem gewünschten Abstand an der Oberflächenstruktur 4 zu platzieren.

Fig. 4 zeigt sehr schematisch ein Armglied 34 in einer Schnittdarstellung. Hier sind beispielhaft sechs Näherungssensoren 30 in einer gemeinsamen Ebene über den Umfang des Armglieds verteilt und weisen jeweils einen Erfassungsbereich 48 auf. Dieser ist beispielsweise jeweils kegelförmig radial nach außen gerichtet. Durch die dichte Anordnung der Näherungssensoren 30 ist es sinnvoll, diese sequenziell derart anzusteuern, dass sie sich gegenseitig nicht beeinflussen.

Anhand von Fig. 4 werden beispielhaft drei Paare I, II und III von Näherungssensoren 30 gezeigt, die jeweils aus zwei diametral einander gegenüberliegenden Näherungssensoren 30 bestehen. Diese drei Paare I, II und III werden beispielhaft nacheinander angesteuert, um nacheinander jeweils zwei Abstände erfassen zu können. Damit wird sichergestellt, dass sich die Erfassungsbereiche 48 nicht überlagern.

Fig. 5 zeigt schließlich einen Ausschnitt einer Oberfläche eines Armglieds 34, an dem ein Netz 50 von elektrischen Anschlussleitungen 52 und 54 vorgesehen ist. Hier sind erste Anschlussleitungen 52 beispielhaft mit einem negativen Spannungspol verbunden, während zweite Anschlussleitungen 54 jeweils mit einem positiven Spannungspol verbunden sind. Diese folgen mehrfach und in abwechselnder Folge aufeinander und bilden hierdurch das Netz 50. Einzelne Näherungssensoren 30 lassen sich jeweils auf ein paar von zwei Anschlussleitungen 52 und 54 anordnen, um mit einer Spannung versorgt zu werden.

Es ist denkbar, dass die Näherungssensoren 30 dann drahtlos mit der Steuereinheit 28 kommunizieren. Dies kann direkt oder mit Hilfe eines Routers 56 erfolgen. Damit lassen sich der Manipulator 16 und gegebenenfalls auch das Bodenfahrzeug 14 besonders einfach und flexibel mit Näherungssensoren 30 ausstatten. Deren Platzierung kann gegebenenfalls modifiziert werden. Insbesondere bei der Verwendung eines maschinellen Lernalgorithmus ist das System 2 in der Lage, auch umplatzierte Näherungssensoren 30 zu erkennen und die Steuerung entsprechend daran anzupassen.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 2: System
- 4: Oberflächenstruktur
- 6: Luftfahrzeug
- 8: Fenster
- 10: Montage- bzw. Bauplatz
- 12: Boden
- 14: Bodenfahrzeug
- 16: Manipulator
- 18: Bodenschiene
- 20: Geländer / Objekt
- 22: Antrieb
- 24: Inspektionsvorrichtung
- 26: Bild
- 28: Steuereinheit
- 30: Näherungssensor
- 32: Zone
- 34: Armglied
- 36: Gelenk
- 38: Basisgelenk
- 40: Endeffektorgelenk
- 42: Inspektionsposition
- 44: Startposition/Endposition
- 46: Endeffektorzone
- 48: Erfassungsbereich
- 50: Netz
- 52: Anschlussleitung
- 54: Anschlussleitung
- 56: Router
- I, II, III: Paare von Näherungssensoren

## Patentansprüche

1. System (2) zum Prüfen einer Oberflächenstruktur (4) eines Luft- oder Raumfahrzeugs, aufweisend:
ein Bodenfahrzeug (14) mit einem Antrieb (22),
einen auf dem Bodenfahrzeug (14) angeordneten Manipulator (16) mit mehreren, gelenkig zueinander angeordneten Bewegungsgliedern (34),
eine an dem Manipulator (16) angeordnete und durch den Manipulator (16) bewegbare Inspektionsvorrichtung (24),
mehrere Näherungssensoren (30), und
eine Steuereinheit (28),
wobei die Näherungssensoren (30) zumindest an dem Manipulator (16) verteilt sind und dort in mehrere Zonen (32, 46) unterteilt sind und dazu ausgebildet sind, einen Abstand des Näherungssensors (30) zu einem Objekt in einem jeweiligen Erfassungsbereich (48) zu erfassen,
wobei der Antrieb (22) und die Näherungssensoren (30) mit der Steuereinheit (28) gekoppelt sind,
wobei die Inspektionsvorrichtung (24) dazu eingerichtet ist, eine Eigenschaft der Oberflächenstruktur (4) zu bestimmen und Punkte mit einer Formabweichung durch Vergleich mit einer Soll-Eigenschaft zu identifizieren,
wobei das System (2) dazu ausgebildet ist, sukzessive die Oberflächenstruktur (4) des Luft- oder Raumfahrzeugs durch sukzessives Bewegen der Inspektionsvorrichtung (24) entlang der Oberflächenstruktur (4) zu inspizieren, und
wobei die Steuereinheit (28) dazu ausgebildet ist, von den Näherungssensoren (30) erfasste Abstände aufzunehmen, und den Antrieb (22) und den Manipulator (16) unter Berücksichtigung der erfassten Abstände derart anzusteuern, dass die Inspektionsvorrichtung (24) nacheinander an Inspektionspositionen (42) in einem vorgegebenen Abstand zu der Oberflächenstruktur (4) platziert wird und gleichzeitig ein ausreichender Abstand des Bodenfahrzeugs (14) und des Manipulators (16) von der Oberflächenstruktur (4) und etwaiger, die Oberflächenstruktur (4) umgebender Objekte eingehalten wird.

2. System (2) nach Anspruch 1,
wobei die Steuereinheit (28) dazu ausgebildet ist, diejenigen Elemente des Manipulators (16), die näher an einem Objekt oder der Oberflächenstruktur (4) gelegen sind als andere Elemente, mit einer geringeren Geschwindigkeit zu bewegen als die anderen Elemente.

3. System (2) nach Anspruch 1 oder 2,
wobei die Zonen (32, 46) eine Endeffektorzone (46) umfassen, die an die Inspektionsvorrichtung (24) angrenzt oder in deren Bereich die Inspektionsvorrichtung (24) angeordnet ist,
wobei die Steuereinheit (28) dazu ausgebildet ist, aus erfassten Entfernungen der Näherungssensoren (30) in der Endeffektorzone (46) die Platzierung der Inspektionsvorrichtung (24) an einer der Inspektionspositionen (42) zu unterstützen.

4. System (2) nach einem der vorhergehenden Ansprüche,
wobei die Steuereinheit (28) dazu ausgebildet ist, einen Bewegungspfad der Inspektionsvorrichtung (24) zum Erreichen der Inspektionspositionen (42) zu planen, wobei die erfassten Abstände der Näherungssensoren (30) unterschiedlich gewichtet werden.

5. System (2) nach Anspruch 4,
wobei die Steuereinheit (28) dazu ausgebildet ist, mindestens ein Modell für maschinelles Lernen zu nutzen, um den Bewegungspfad für das Bodenfahrzeug (14) und/oder den Manipulator (16) zu planen,
wobei der Bewegungspfad zumindest teilweise auf Grundlage einer Wertfunktion abgeleitet wird, die die erfassten Abstände umfasst und hieraus Kollisionswahrscheinlichkeiten zwischen dem Bodenfahrzeug (14) bzw. dem Manipulator (16) und der Oberflächenstruktur (4) und anderen Objekten beschreibt, und
wobei der Bewegungspfad eine Abfolge von Bewegungsabläufen des Bodenfahrzeugs (14) und/oder des Manipulators (16) umfasst.

6. System (2) nach einem der vorhergehenden Ansprüche,
wobei die Steuereinheit (28) dazu ausgebildet ist, die Näherungssensoren (30) zum Vermeiden von gegenseitiger Beeinflussung sequenziell anzusteuern.

7. System (2) nach einem der vorhergehenden Ansprüche,
wobei der Manipulator (16) ein Roboterarm ist, der über ein Basisgelenk (38) mit dem Bodenfahrzeug (14) verbunden ist,
wobei die Bewegungsglieder (34) längliche Armglieder (34) sind, und
wobei der Manipulator (16) ein Endeffektorgelenk (40) umfasst, an dem die Inspektionsvorrichtung (24) angeordnet ist.

8. System (2) nach einem der vorhergehenden Ansprüche,
wobei der Manipulator (16) ein Netz (50) aus elektrischen Anschlussleitungen (52, 54) umfasst, das zumindest bereichsweise an einer Oberfläche des Manipulators (16) verläuft, und
wobei die Näherungssensoren (30) an der Oberfläche des Manipulators (16) angeordnet und mit dem Netz (50) verbindbar sind.

9. System (2) nach Anspruch 8,
wobei die Anschlussleitungen (52, 54) dazu ausgebildet sind, eine elektrische Versorgungsspannung für die Näherungssensoren (30) bereitzustellen, und
wobei die Näherungssensoren (30) dazu ausgebildet sind, drahtlos mit der Steuereinheit (28) zu kommunizieren.

10. System (2) nach einem der vorhergehenden Ansprüche,
wobei das System (2) dazu ausgebildet ist, einen identifizierten Punkt mit einer Formabweichung mittels einer ablösbaren Markierung zu markieren.

11. Verfahren zum Prüfen einer Oberflächenstruktur (4) eines Luft- oder Raumfahrzeugs, aufweisend die Schritte:
Bereitstellen mindestens eines Bodenfahrzeugs (14) mit einem Antrieb (22), einem auf dem Bodenfahrzeug (14) angeordneten Manipulator (16) mit mehreren, gelenkig zueinander angeordneten Bewegungsgliedern, eine an dem Manipulator (16) angeordnete und durch den Manipulator (16) bewegbare Inspektionsvorrichtung (24), und mehrere Näherungssensoren (30), die zumindest an dem Manipulator (16) verteilt sind und dort in mehrere Zonen (32, 46) unterteilt sind und dazu ausgebildet sind, einen Abstand des Näherungssensors (30) zu einem Objekt in einem jeweiligen Erfassungsbereich zu erfassen, und
sukzessives Bewegen der Inspektionsvorrichtung (24) entlang der Oberflächenstruktur (4) durch Ansteuern mit einer Steuereinheit (28), und Identifizieren von Punkten mit einer Formabweichung durch Bestimmen einer Eigenschaft der Oberflächenstruktur (4) und Vergleichen mit einer Soll-Eigenschaft,
wobei das Ansteuern das Aufnehmen von von den Näherungssensoren (30) erfassten Abständen und das Steuern des Antriebs (22) und des Manipulators (16) unter Berücksichtigung der erfassten Abstände umfasst, sodass die Inspektionsvorrichtung (24) nacheinander an Inspektionspositionen in einem vorgegebenen Abstand zu der Oberflächenstruktur (4) platziert wird und gleichzeitig ein ausreichender Abstand des Bodenfahrzeugs (14) und des Manipulators (16) von der Oberflächenstruktur (4) und etwaiger, die Oberflächenstruktur (4) umgebender Objekte eingehalten wird.

12. Verfahren nach Anspruch 11,
wobei die Steuereinheit (28) diejenigen Elemente des Manipulators (16), die näher an einem Objekt oder der Oberflächenstruktur (4) gelegen sind, derart ansteuert, dass sie sich mit einer geringeren Geschwindigkeit bewegen als andere Elemente.

13. Verfahren nach Anspruch 11 oder 12,
wobei die Steuereinheit (28) einen Bewegungspfad der Inspektionsvorrichtung (24) zum Erreichen der Inspektionspositionen plant, wobei die erfassten Abstände der Näherungssensoren (30) unterschiedlich gewichtet werden.

14. Verfahren nach Anspruch 13,
wobei die Steuereinheit (28) mindestens ein Modell für maschinelles Lernen nutzt, um den Bewegungspfad für das Bodenfahrzeug (14) und/oder den Manipulator (16) zu planen,
wobei der Bewegungspfad zumindest teilweise auf Grundlage einer Wertfunktion abgeleitet wird, die die erfassten Abstände umfasst und hieraus Kollisionswahrscheinlichkeiten beschreibt, und
wobei der Bewegungspfad eine Abfolge von Bewegungsabläufen des Bodenfahrzeugs (14) und/oder des Manipulators (16) umfasst.

15. Verfahren nach einem der Ansprüche 11 bis 14,
wobei mehrere Bodenfahrzeuge (14) mit darauf angeordnetem Manipulator (16) und Inspektionsvorrichtung (24) oder mindestens ein Bodenfahrzeug (14) und mindestens eine andere, einen Manipulator (16) und eine Inspektionsvorrichtung (24) tragende und eine Steuereinheit (28) aufweisende Vorrichtungen gemeinsam mehrere Abschnitte der Oberflächenstruktur (4) prüfen, und
wobei die Steuereinheiten (28) miteinander koppelbar sind, um Positionsangaben des jeweiligen Bodenfahrzeugs (14) oder der anderen Vorrichtung und/oder des jeweiligen Manipulators (16) und/oder der jeweiligen Inspektionsvorrichtung (24) zu kommunizieren, und/oder um jeweils erfasste Abstände mit Positionsangaben des jeweiligen Bodenfahrzeugs (14) oder der anderen Vorrichtung und/oder des jeweiligen Manipulators (16) und/oder der jeweiligen Inspektionsvorrichtung (24) zu kommunizieren.

## Claims

1. System (2) for inspecting a surface structure (4) of an aircraft or spacecraft, comprising: a ground vehicle (14) with a drive (22), a manipulator (16) arranged on the ground vehicle (14) with several articulately arranged movement members (34), an inspection device (24) arranged on the manipulator (16) and movable by the manipulator (16), several proximity sensors (30), and a control unit (28), wherein the proximity sensors (30) are distributed at least on the manipulator (16) and are divided there into several zones (32, 46) and are designed to detect a distance of the proximity sensor (30) to an object in a respective detection area (48), wherein the drive (22) and the proximity sensors (30) are coupled to the control unit (28), wherein the inspection device (24) is configured to determine a property of the surface structure (4) and to identify points with a shape deviation by comparison with a target property, wherein the system (2) is designed to successively inspect the surface structure (4) of the aircraft or spacecraft by successively moving the inspection device (24) along the surface structure (4), and wherein the control unit (28) is designed to record distances detected by the proximity sensors (30), and to control the drive (22) and the manipulator (16) taking into account the detected distances such that the inspection device (24) is successively placed at inspection positions (42) at a predetermined distance from the surface structure (4) and at the same time a sufficient distance of the ground vehicle (14) and the manipulator (16) from the surface structure (4) and any objects surrounding the surface structure (4) is maintained.

2. System (2) according to claim 1, wherein the control unit (28) is designed to move those elements of the manipulator (16) that are closer to an object or the surface structure (4) than other elements, at a lower speed than the other elements.

3. System (2) according to claim 1 or 2, wherein the zones (32, 46) comprise an end effector zone (46) that adjoins the inspection device (24) or in whose area the inspection device (24) is arranged, wherein the control unit (28) is designed to support the placement of the inspection device (24) at one of the inspection positions (42) from detected distances of the proximity sensors (30) in the end effector zone (46).

4. System (2) according to one of the preceding claims, wherein the control unit (28) is designed to plan a movement path of the inspection device (24) for reaching the inspection positions (42), wherein the detected distances of the proximity sensors (30) are weighted differently.

5. System (2) according to claim 4, wherein the control unit (28) is designed to use at least one machine learning model to plan the movement path for the ground vehicle (14) and/or the manipulator (16), wherein the movement path is derived at least partially based on a value function that includes the detected distances and describes collision probabilities between the ground vehicle (14) or the manipulator (16) and the surface structure (4) and other objects, and wherein the movement path comprises a sequence of movements of the ground vehicle (14) and/or the manipulator (16).

6. System (2) according to one of the preceding claims, wherein the control unit (28) is designed to sequentially activate the proximity sensors (30) to avoid mutual interference.

7. System (2) according to one of the preceding claims, wherein the manipulator (16) is a robotic arm that is connected to the ground vehicle (14) via a base joint (38), wherein the movement members (34) are elongated arm members (34), and wherein the manipulator (16) comprises an end effector joint (40) on which the inspection device (24) is arranged.

8. System (2) according to one of the preceding claims, wherein the manipulator (16) comprises a network (50) of electrical connection lines (52, 54) that runs at least partially on a surface of the manipulator (16), and wherein the proximity sensors (30) are arranged on the surface of the manipulator (16) and can be connected to the network (50).

9. System (2) according to claim 8, wherein the connection lines (52, 54) are designed to provide an electrical supply voltage for the proximity sensors (30), and wherein the proximity sensors (30) are designed to communicate wirelessly with the control unit (28).

10. System (2) according to one of the preceding claims, wherein the system (2) is designed to mark an identified point with a shape deviation by means of a removable marking.

11. Method for inspecting a surface structure (4) of an aircraft or spacecraft, comprising the steps of: providing at least one ground vehicle (14) with a drive (22), a manipulator (16) arranged on the ground vehicle (14) with several articulately arranged movement members, an inspection device (24) arranged on the manipulator (16) and movable by the manipulator (16), and several proximity sensors (30), which are distributed at least on the manipulator (16) and are divided there into several zones (32, 46) and are designed to detect a distance of the proximity sensor (30) to an object in a respective detection area, and successively moving the inspection device (24) along the surface structure (4) by controlling with a control unit (28), and identifying points with a shape deviation by determining a property of the surface structure (4) and comparing it with a target property, wherein the controlling comprises recording distances detected by the proximity sensors (30) and controlling the drive (22) and the manipulator (16) taking into account the detected distances, so that the inspection device (24) is successively placed at inspection positions at a predetermined distance from the surface structure (4) and at the same time a sufficient distance of the ground vehicle (14) and the manipulator (16) from the surface structure (4) and any objects surrounding the surface structure (4) is maintained.

12. Method according to claim 11, wherein the control unit (28) controls those elements of the manipulator (16) that are closer to an object or the surface structure (4) such that they move at a lower speed than other elements.

13. Method according to claim 11 or 12, wherein the control unit (28) plans a movement path of the inspection device (24) for reaching the inspection positions, wherein the detected distances of the proximity sensors (30) are weighted differently.

14. Method according to claim 13, wherein the control unit (28) uses at least one machine learning model to plan the movement path for the ground vehicle (14) and/or the manipulator (16), wherein the movement path is derived at least partially based on a value function that includes the detected distances and describes collision probabilities, and wherein the movement path comprises a sequence of movements of the ground vehicle (14) and/or the manipulator (16).

15. Method according to one of claims 11 to 14, wherein several ground vehicles (14) with a manipulator (16) and inspection device (24) arranged thereon, or at least one ground vehicle (14) and at least one other device carrying a manipulator (16) and an inspection device (24) and having a control unit (28), jointly inspect several sections of the surface structure (4), and wherein the control units (28) can be coupled to each other to communicate position data of the respective ground vehicle (14) or the other device and/or the respective manipulator (16) and/or the respective inspection device (24), and/or to communicate respectively detected distances with position data of the respective ground vehicle (14) or the other device and/or the respective manipulator (16) and/or the respective inspection device (24).

## Revendications

1. Système (2) pour l'inspection d'une structure de surface (4) d'un aéronef ou d'un engin spatial, comprenant: un véhicule terrestre (14) avec un entraînement (22), un manipulateur (16) agencé sur le véhicule terrestre (14) avec plusieurs éléments de mouvement (34) agencés de manière articulée les uns par rapport aux autres, un dispositif d'inspection (24) agencé sur le manipulateur (16) et déplaçable par le manipulateur (16), plusieurs capteurs de proximité (30), et une unité de commande (28), les capteurs de proximité (30) étant répartis au moins sur le manipulateur (16) et y étant subdivisés en plusieurs zones (32, 46) et étant conçus pour détecter une distance du capteur de proximité (30) à un objet dans une zone de détection respective (48), l'entraînement (22) et les capteurs de proximité (30) étant couplés à l'unité de commande (28), le dispositif d'inspection (24) étant configuré pour déterminer une propriété de la structure de surface (4) et pour identifier des points présentant un écart de forme par comparaison avec une propriété cible, le système (2) étant conçu pour inspecter successivement la structure de surface (4) de l'aéronef ou de l'engin spatial en déplaçant successivement le dispositif d'inspection (24) le long de la structure de surface (4), et l'unité de commande (28) étant conçue pour enregistrer les distances détectées par les capteurs de proximité (30), et pour commander l'entraînement (22) et le manipulateur (16) en tenant compte des distances détectées de manière à ce que le dispositif d'inspection (24) soit placé successivement à des positions d'inspection (42) à une distance prédéfinie de la structure de surface (4) et qu'en même temps une distance suffisante du véhicule terrestre (14) et du manipulateur (16) par rapport à la structure de surface (4) et à tout objet entourant la structure de surface (4) soit maintenue.

2. Système (2) selon la revendication 1, dans lequel l'unité de commande (28) est conçue pour déplacer les éléments du manipulateur (16) qui sont plus proches d'un objet ou de la structure de surface (4) que d'autres éléments, à une vitesse inférieure à celle des autres éléments.

3. Système (2) selon la revendication 1 ou 2, dans lequel les zones (32, 46) comprennent une zone d'effecteur final (46) qui jouxte le dispositif d'inspection (24) ou dans la zone de laquelle le dispositif d'inspection (24) est agencé, l'unité de commande (28) étant conçue pour prendre en charge le positionnement du dispositif d'inspection (24) à l'une des positions d'inspection (42) à partir des distances détectées par les capteurs de proximité (30) dans la zone d'effecteur final (46).

4. Système (2) selon l'une des revendications précédentes, dans lequel l'unité de commande (28) est conçue pour planifier un chemin de mouvement du dispositif d'inspection (24) pour atteindre les positions d'inspection (42), les distances détectées des capteurs de proximité (30) étant pondérées différemment.

5. Système (2) selon la revendication 4, dans lequel l'unité de commande (28) est conçue pour utiliser au moins un modèle d'apprentissage automatique afin de planifier le chemin de mouvement pour le véhicule terrestre (14) et/ou le manipulateur (16), le chemin de mouvement étant dérivé au moins partiellement sur la base d'une fonction de valeur qui comprend les distances détectées et qui décrit les probabilités de collision entre le véhicule terrestre (14) ou le manipulateur (16) et la structure de surface (4) et d'autres objets, et le chemin de mouvement comprenant une séquence de mouvements du véhicule terrestre (14) et/ou du manipulateur (16).

6. Système (2) selon l'une des revendications précédentes, dans lequel l'unité de commande (28) est conçue pour activer séquentiellement les capteurs de proximité (30) afin d'éviter toute interférence mutuelle.

7. Système (2) selon l'une des revendications précédentes, dans lequel le manipulateur (16) est un bras robotique qui est connecté au véhicule terrestre (14) via une articulation de base (38), les éléments de mouvement (34) étant des éléments de bras allongés (34), et le manipulateur (16) comprenant une articulation d'effecteur final (40) sur laquelle le dispositif d'inspection (24) est agencé.

8. Système (2) selon l'une des revendications précédentes, dans lequel le manipulateur (16) comprend un réseau (50) de lignes de connexion électriques (52, 54) qui s'étend au moins partiellement sur une surface du manipulateur (16), et les capteurs de proximité (30) étant agencés sur la surface du manipulateur (16) et pouvant être connectés au réseau (50).

9. Système (2) selon la revendication 8, dans lequel les lignes de connexion (52, 54) sont conçues pour fournir une tension d'alimentation électrique pour les capteurs de proximité (30), et les capteurs de proximité (30) étant conçus pour communiquer sans fil avec l'unité de commande (28).

10. Système (2) selon l'une des revendications précédentes, dans lequel le système (2) est conçu pour marquer un point identifié avec un écart de forme au moyen d'un marquage amovible.

11. Procédé d'inspection d'une structure de surface (4) d'un aéronef ou d'un engin spatial, comprenant les étapes consistant à: fournir au moins un véhicule terrestre (14) avec un entraînement (22), un manipulateur (16) agencé sur le véhicule terrestre (14) avec plusieurs éléments de mouvement agencés de manière articulée les uns par rapport aux autres, un dispositif d'inspection (24) agencé sur le manipulateur (16) et déplaçable par le manipulateur (16), et plusieurs capteurs de proximité (30), qui sont répartis au moins sur le manipulateur (16) et y sont subdivisés en plusieurs zones (32, 46) et sont conçus pour détecter une distance du capteur de proximité (30) à un objet dans une zone de détection respective, et déplacer successivement le dispositif d'inspection (24) le long de la structure de surface (4) par commande avec une unité de commande (28), et identifier des points présentant un écart de forme en déterminant une propriété de la structure de surface (4) et en la comparant avec une propriété cible, la commande comprenant l'enregistrement des distances détectées par les capteurs de proximité (30) et la commande de l'entraînement (22) et du manipulateur (16) en tenant compte des distances détectées, de manière à ce que le dispositif d'inspection (24) soit placé successivement à des positions d'inspection à une distance prédéfinie de la structure de surface (4) et qu'en même temps une distance suffisante du véhicule terrestre (14) et du manipulateur (16) par rapport à la structure de surface (4) et à tout objet entourant la structure de surface (4) soit maintenue.

12. Procédé selon la revendication 11, dans lequel l'unité de commande (28) commande les éléments du manipulateur (16) qui sont plus proches d'un objet ou de la structure de surface (4) de manière à ce qu'ils se déplacent à une vitesse inférieure à celle des autres éléments.

13. Procédé selon la revendication 11 ou 12, dans lequel l'unité de commande (28) planifie un chemin de mouvement du dispositif d'inspection (24) pour atteindre les positions d'inspection, les distances détectées des capteurs de proximité (30) étant pondérées différemment.

14. Procédé selon la revendication 13, dans lequel l'unité de commande (28) utilise au moins un modèle d'apprentissage automatique pour planifier le chemin de mouvement pour le véhicule terrestre (14) et/ou le manipulateur (16), le chemin de mouvement étant dérivé au moins partiellement sur la base d'une fonction de valeur qui comprend les distances détectées et qui décrit les probabilités de collision, et le chemin de mouvement comprenant une séquence de mouvements du véhicule terrestre (14) et/ou du manipulateur (16).

15. Procédé selon l'une des revendications 11 à 14, dans lequel plusieurs véhicules terrestres (14) avec un manipulateur (16) et un dispositif d'inspection (24) agencés dessus, ou au moins un véhicule terrestre (14) et au moins un autre dispositif portant un manipulateur (16) et un dispositif d'inspection (24) et ayant une unité de commande (28), inspectent conjointement plusieurs sections de la structure de surface (4), et dans lequel les unités de commande (28) peuvent être couplées les unes aux autres pour communiquer les indications de position du véhicule terrestre (14) respectif ou de l'autre dispositif et/ou du manipulateur (16) respectif et/ou du dispositif d'inspection (24) respectif, et/ou pour communiquer les distances respectivement détectées avec les indications de position du véhicule terrestre (14) respectif ou de l'autre dispositif et/ou du manipulateur (16) respectif et/ou du dispositif d'inspection (24) respectif.
